**Europäisches Patentamt**

**European Patent Office**

**Office européen des brevets**

(11) Veröffentlichungsnummer: **0 259 651**
**A1**

# (12) EUROPÄISCHE PATENTANMELDUNG

(21) Anmeldenummer: 87111869.1

(22) Anmeldetag: 17.08.87

(51) Int. Cl.⁴: **B23K 26/00**

(30) Priorität: 11.09.86 DE 3630889

(43) Veröffentlichungstag der Anmeldung:
16.03.88 Patentblatt 88/11

(84) Benannte Vertragsstaaten:
AT BE CH FR GB IT LI NL SE

(71) Anmelder: **Fried. Krupp Gesellschaft mit beschränkter Haftung**
**Altendorfer Strasse 103**
**D-4300 Essen 1(DE)**

(72) Erfinder: **Lentz, Norbert, Dr.-Ing.**
**Lindauhöhe 30**
**D-4300 Essen 15(DE)**
Erfinder: **Müller, Reinhard, Dr.-Ing.**
**Klapperstrasse 97**
**D-4300 Essen 14(DE)**
Erfinder: **Nahrgang, Richard, Dipl.-Ing.**
**Juistweg 52**
**D-4300 Essen 1(DE)**

(54) **Verfahren zum Längsnahtschweissen von Behälterrümpfen mittels Laserstrahl und Vorrichtung zur Durchführung des Verfahrens.**

(57) Bei dem vorliegenden Verfahren werden die Seitenenden (18, 19) des Blechs, dessen Breite die nominelle Umfangslänge des Behälterrumpfes (1) übersteigt, in eine solche Position zueinander gebracht, daß sie einen spitzen Winkel (Gamma) bilden, wobei die Kante (43) des einen Seitenendes (19) auf die Innenfläche (16) des anderen Seitenendes (18) weist. In die durch diesen spitzen Winkel gebildete Öffnung wird ein fokussierter Laserstrahl (15) gerichtet, der - parallel zu den Seitenenden (18, 19) - eine Relativbewegung zu dieser Öffnung aufweist. Die örtlich erschmolzenen Seitenenden werden noch vor dem Unterschreiten der Schweißtemperatur aufeinander gedrückt.

FIG.5

## Verfahren zum Längsnantschweißen von Behälterrümpfen mittels Laserstrahl und Vorrichtung zur Durchführung des Verfahrens

Die Erfindung betrifft ein Verfahren zum Herstellen von Behälterrümpfen aus Blech mit mittels eines Laserstrahls geschweißter Längsnaht und einer Vorrichtung zur Durchführung dieses Verfahrens.

Aus der DE-OS 27 01 427 ist ein Verfahren zum Herstellen von Behälterrümpfen aus Blech mit geraden Seitenenden mit mittels eines Laserstrahls geschweißter Längsnaht bekannt, bei dem die Kanten der Seitenenden zum Schweißen stumpf aneinander gehalten werden. Mit diesem Verfahren sind einwandfreie Nähte bis zu Schweißgeschwindigkeiten von etwa 30 m/min erreichbar. Bei höheren Schweißgeschwindigkeiten besteht die Gefahr, daß sich Unregelmäßigkeiten oder Ungänzen wie Risse, Lunker oder Poren in der Schweißnaht ausbilden. Solche Unregelmäßigkeiten entstehen zum Teil durch ein steiles Temperaturgefälle in den an die aneinanderstoßenden Kanten angrenzenden Bereiche des Blechs.

Außerdem ist aus der DE-OS 29 20 428 ein Verfahren und eine Vorrichtung zum Herstellen mittels eines Laserstrahls geschweißter Hohlprofile bekannt, bei dem beide Seitenkanten des vorgeformten Profils vor dem Verschweißen zusammen radial nach außen gerichtet sind. Bei diesem Verfahren ist es aber schwierig, ohne weitere Bearbeitung eine glatte Schweißnaht zu erhalten.

Aus der DE-OS 32 19 252 ist weiter ein Verfahren zum Schweißen von Metallteilen ausgeprägter geometrischer Zwangsgestalt mit relativ großer Blechdicke, insbesondre von einem Plattenband und einem Steg einer Bremsbacke, bekannt. Bei diesem Verfahren werden die Metallteile in ihrer endgültigen Formgebung in gegenseitige Anlage gedrängt und mittels eines fokussierten Laserstrahls zusammengeschweißt. Um der durch die Schweißwärme hervorgerufenen Spannung in den Metallteilen entgegenzuwirken, wird bei diesem Verfahren in der Nähe der Schweißstelle z.B. durch eine Rolle eine zusätzliche Kraft auf die Verbindung der Metallteile aufgebracht.

Aus der DE-OS 26 47 082 ist ein Verfahren bekannt, bei dem zwei sich jeweils in ihrer Längserstreckung bewegte Streifen zur Bildung einer gemeinsamen Überlapptverbindung in Bewegungsrichtung winkelförmig zusammengeführt und durch ein Druckrollenpaar zusammengedrückt werden. In den Bereich, in dem die beiden Streifen zusammenlaufen, wird ein fokussierter Laserstrahl gerichtet, der eine kontinuierliche Schweißnaht der Überlapptnaht bewirkt.

Schließlich ist aus der US-PS 4 237 363 ein Verfahren zum punkt-oder linienförmigen Aneinanderschweißen zweier übereinanderliegender ebener Bleche bekannt, bei dem ein Elektronen-oder Laserstrahl auf die Außenseite eines der Blechteile gerichtet ist. Ein entsprechender Nachteil dieses Verfahrens ist, daß die Oberfläche des einen Blechteils durch den Elektronen-bzw. Laserstrahl beeinträchtigt wird.

Der Erfindung liegt die Aufgabe zugrunde, ein Verfahren zum Herstellen von Behälterrümpfen aus Blech mit mittels eines Laserstrahls geschweißter Längsnaht zu schaffen, mit dem eine einwandfreie Qualität der Naht auch bei hohen Schweißgeschwindigkeiten erreicht werden kann. Weiterhin ist eine Vorrichtung zur Durchführung des Verfahrens zu schaffen.

Diese Aufgabe wird - soweit sie das Verfahren betrifft - durch die im Anspruch 1 gekennzeichneten Merkmale gelöst. Durch die Bildung eines spitzen Winkels zwischen den Seitenenden des Blechs ist es möglich, die aufeinander zu fügenden Flächen des Blechs durch den fokussierten Laserstrahl zu erhitzen und in teigigen bzw. -schmelzflüssigen Zustand zu bringen, während die von der zu schweißenden Naht abgewandten Flächen der Seitenenden eine weitgehend feste Struktur behalten. Durch das unmittelbar anschließende Aufeinanderdrücken der Seitenenden bzw. das Zusammendrücken der angeschmolzenen Flächenteile der Seitenenden wird eine feste Nahtverbindung geschaffen. Die Verformung des Werkstoffs beschränkt sich dabei nicht nur auf den -schmelzflüssigen bzw. teigigen Bereich, es werden auch die an der Fügestelle angrenzenden Randbereiche des Blechs verformt. Diese Bereiche werden plastisch, also bleibend verformt, wobei die Verformung vorzugsweise senkrecht zur einwirkenden Andrückkraft erfolgt. Da im Bereich in und um die Längs-oder Schweißnaht eine meist bleibende Verformung vorgenommen wird, werden die bei rascher Abkühlung der Schmelze und der daran angrenzenden Bereiche der Fügestelle auftretender Schrumpfspannungen weitgehend kompensiert bzw. abgebaut. Der Gefahr einer Rißbildung in der Schweißnaht wird auf diese Weise entgegengewirkt.

Vorteilhafte Weiterbildungen der Erfindung sind in den Unteransprüchen beschrieben. So ergibt sich bei der Ausgestaltung des Verfahrens nach Anspruch 2 eine gute Führung der Seitenenden auf dem Formdorn. Bei der Ausgestaltung des Verfahrens nach Anspruch 3 kann der Winkel zwischen den Seitenenden gebildet werden, ohne daß das eine Seitenende abgewinkelt werden muß, wobei das zusätzliche Abwinkeln nach Anspruch 4 eine Vergrößerung des Öffnungswinkels ermöglicht.

Um die verschiedenen Reflexions-bzw. Absorptionsvermögen der miteinander zu verschweißenden Kontakt-oder Schweißflächen der Seitenenden des Behälterrumpfes zu berücksichtigen, ist die Achse des fokussierten Laserstrahls entsprechend Anspruch 5 veränderbar. Um eine optimale Wärmeverteilung auf die Kontakt-oder Schweißflächen insbesondere auch bei unterschiedlicher Beschaffenheit der Flächen zu erreichen, ist die Achse des Laserstrahls gemäß Anspruch 6 auch um eine waagerechte Achse verschwenkbar.

Mit der Ausgestaltung des Verfahrens nach Anspruch 7 schließlich wird erreicht, daß die Behälterrümpfe bei nachfolgenden Bearbeitungsvorgängen wie beim Bördeln oder Sicken einfacher zu bearbeiten sind.

Die Vorrichtung zur Durchführung des Verfahrens weist insbesondere ein Druckrollenpaar auf, durch das die Seitenenden vor dem Unterschreiten der Schweißtemperatur zusammengedrückt werden. Dazu ist bei der Vorrichtung nach Anspruch 8 vorgesehen, den lichten Abstand zwischen den Druckrollen auf das nach dem beanspruchten Verfahren vorgesehene Maß einzustellen, während die Begrenzung der bleibenden Dicke der Schweißnaht bei der Vorrichtung nach Anspruch 9 durch eine Druckbeaufschlagung der Druckrollen erreicht wird.

Um ein Seitenende des Blechs vom Formdorn abzuheben, ist nach Anspruch 10 eine über die Oberfläche des Formdorns hinausragende Leiste vorgesehen. Um das andere Seitenende an die Kante des ersten Seitenendes anzunähern ist weiterhin eine Andrückrolle vorgesehen.

Mit der Vorrichtung nach Anspruch 11 ist es möglich, ein Seitenende abzuwinkeln, wobei ein Teil der Profilrollen nach Anspruch 12 gleichzeitig als Transportorgan für den Behälterrumpf dienen kann.

Im einfachsten Fall weisen die Umfangsflächen der Druckrollen eine zylindrische oder leicht konvexe Umfangsfläche auf. Um aber insbesondere bei kleinen zylindrischen Behälterrrümpfen die vorgeformte Form zu erhalten, ist vorgesehen, die äußere Druckrolle mit einer konkaven und die innere Druckrolle mit einer konvexen Umfangsfläche zu versehen. Weiterhin sind die Druckrollen zur Begrenzung ihres Verschleißes aus einem Werkstoff hoher Wärmeleitfähigkeit gebildet und tragen einen Umfangsring aus warmfestem Werkstoff.

Ausführungsbeispiele der Erfindung sind in der Zeichnung schematisch mit zum Teil stark verzerrten Relationen dargestellt und werden nachfolgend näher erläutert. Es zeigen:

Fig. 1 eine Vorrichtung zum Laser-Preßschweißen einer Überlapptnaht eines Dosenrumpfes in einer auszugsweisen Draufsicht,

Fig. 2 die Vorrichtung in einer teilweise geschnittenen Vorderansicht entsprechend dem Pfeil A Fig. 1,

Fig. 3 die Vorrichtung nach Fig. 1 in einer auszugsweisen Seitenansicht,

Fig. 4 die Vorrichtung bei der Bildung eines V-förmigen Schweißspaltes der Seitenenden in einem auszugsweisen Querschnitt,

Fig. 5 die Vorrichtung bei der Bildung eines V-förmigen Schweißspaltes mit sich berührenden Seitenenden in einem auszugsweisen Querschnitt,

Fig. 6 eine andere Ausführungsform der Anordnung zur Bildung eines V-förmigen Schweißspaltes der Seitenenden in einem teilweisen Querschnitt,

Fig. 7 die Anordnung der Vorrichtung nach Fig. 6 in einer auszugsweisen Seitenansicht,

Fig. 8 die Lage der Blechenden auf dem Formdorn nach dem Durchlaufen der Anordnung nach den Fig. 6 und 7 im Brennpunkt des fokussierten Laserstrahls in einem auszugsweisen Querschnitt längs der Linie VIII-VIII in Fig. 7,

Fig. 9 die Lage der Seitenenden des Blechs auf einem mit einer oberen Leiste versehenen Formdorn, wobei das innere Seitenende auf der Leiste aufliegt und das äußere Seitenende nach außen abgewinkelt ist,

Fig. 10 die zwischen den Druckrollen zusammengepreßte Schweißnaht in einem auszugsweisen Querschnitt und

Fig. 11 eine Vorrichtung zum Laser-Preßschweißen einer Überlapptnaht mit einer optischen Einrichtung mit drei Laser-Ausgängen in der Draufsicht.

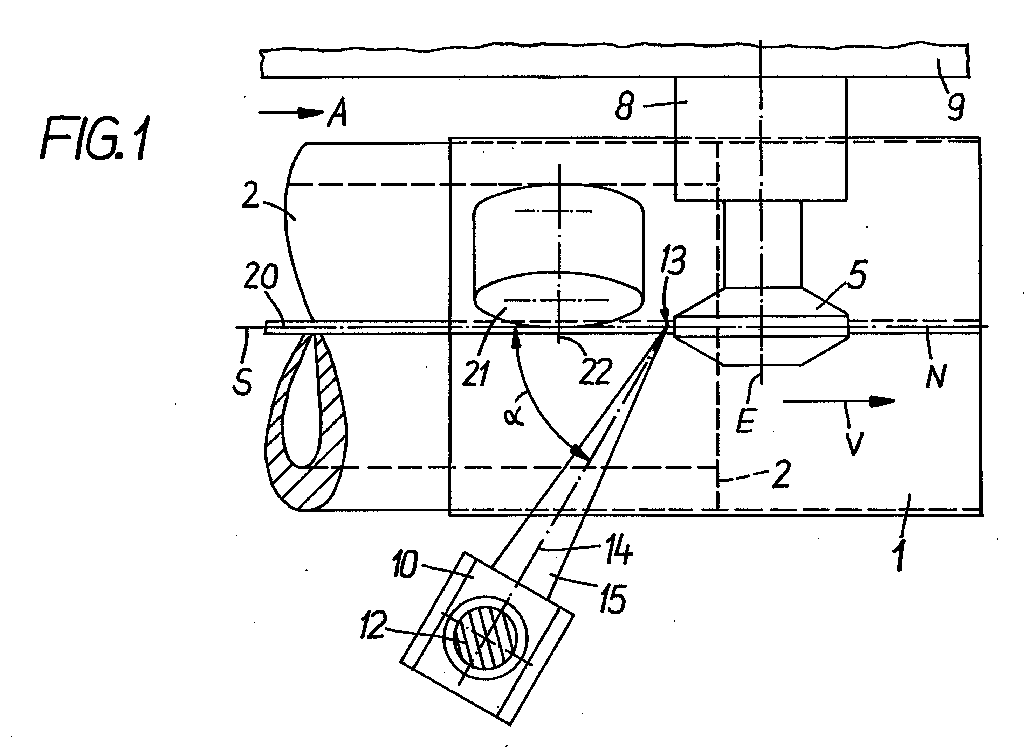

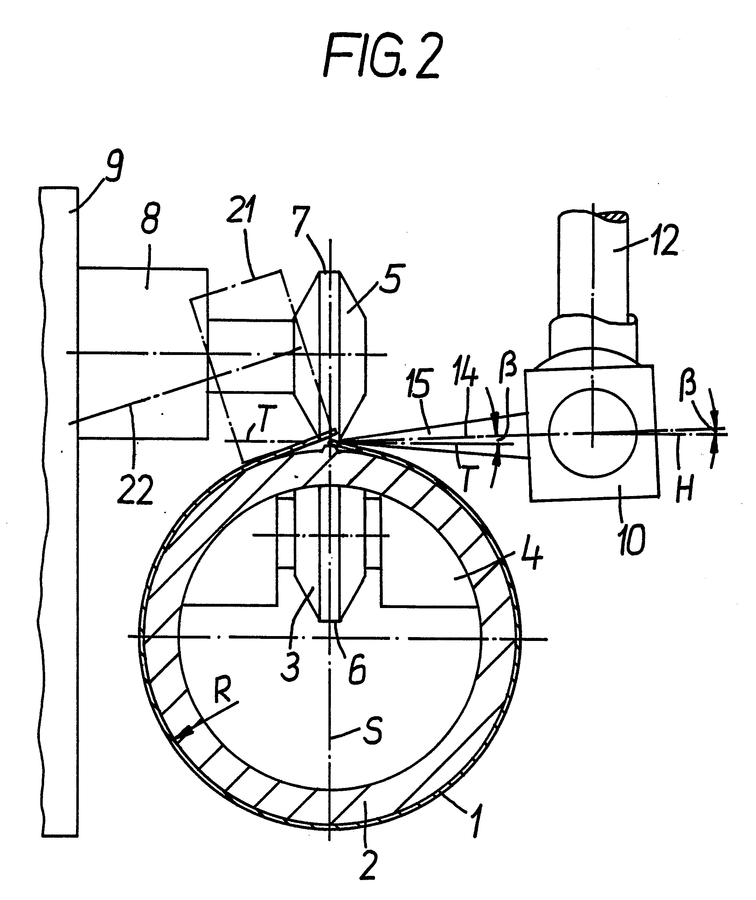

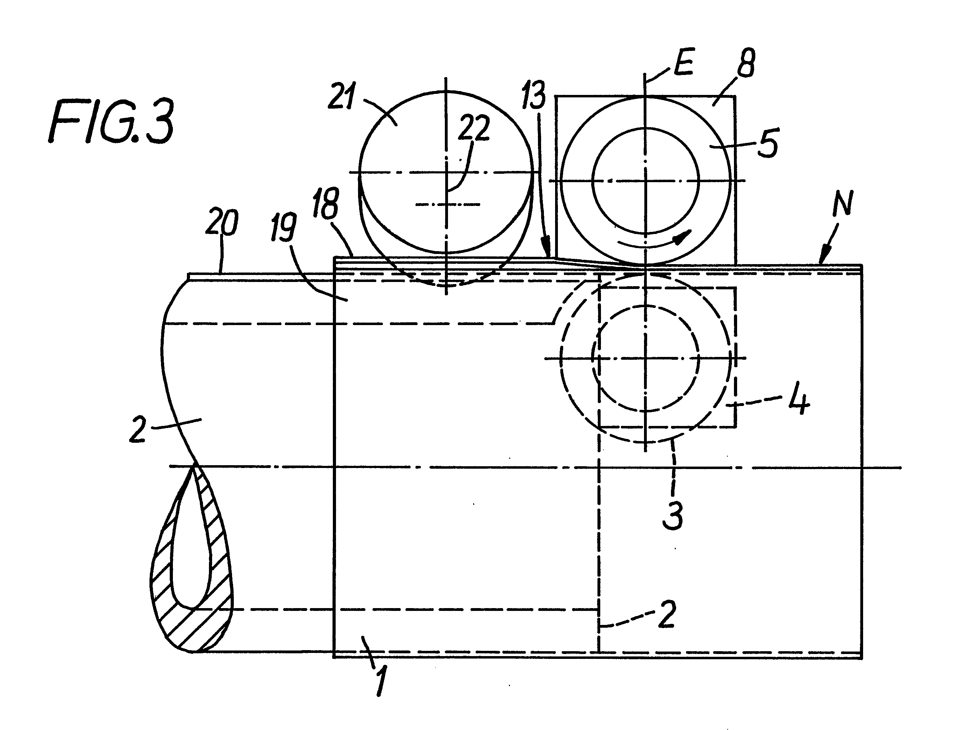

Die Vorrichtung nach den Fig. 1 bis 3 zum Schweißen einer Überlappt-Längsnaht N an Dosenrümpfen 1 aus Blech weist einen Formdorn 2 auf, an dessen Ende eine Druck-oder Preßrolle 3 frei drehbar in einer am Formdorn 2 befestigten Tragarmanordnung 4 gelagert ist, wobei die Tragarmanordnung 4 gegenüber dem Formdorn 2 (in nicht näher dargestellter Weise) in der Höhe verstellbar und die Achse der Druckrolle 15 - in Vorschubrichtung V der zu verschweißenden Dosenrümpfe 1 gesehen - hinter dem Ende des Formdorns 2 angeordnet ist. Über der Druckrolle 3 ist eine durch einen (nicht dargestellten) Antrieb antreibbare Gegenrolle 5 angeordnet. Die Drehachsen der mit jeweils einer zylindrischen Umfangsfläche 6 bzw. 7 versehenen Druckrollen 3 bzw. 5 sind waagerecht, untereinander parallel und senkrecht übereinander angeordnet. Die Druckrolle 5 ist fliegend in einem Lagerbock 8 gelagert, der wiederum an einem Rahmenteil oder einer Grundplatte 9 der Vorrichtung befestigt ist. Durch die Einstellbarkeit der Höhe der Tragarmanordnung 4 ist auch der lichte Abstand a₀ zwischen den zylindrischen Umfangsflächen 6 und 7 der Rollen 3 und 5 veränderlich einstellbar.

Die Vorrichtung weist ferner eine optische Einrichtung 10 auf, die einen Laserstrahl 12 auf einen Brennpunkt 13 konzentriert bzw. fokussiert, der in der senkrechten Längsmittelebene S des Formdorns 2 vor der durch die Achsen der Rollen 3, 5 gegbenen Ebene E liegt. Dabei ist die Längsmittelebene S auch durch die Längsnaht N und die Achse des jeweiligen Dosenrumpfes 1 gegeben. Die optische Einrichtung 10 ist - in Vorschubrichtung V der zu verschweißenden Dosenrümpfe 1 gesehen - vor der durch die Achsen der Rollen 3, 5 gegebenen, senkrecht zur Längsmittelebene S verlaufenden Ebene E angeordnet und gegen eine gedachte waagerechte Ebene H um einen Winkel Beta verschwenkbar. Dabei ist die Ebene H parallel zu der senkrecht zur Längsmittelebene S verlaufenden gedachten Tangentialebene T an den Dosenrumpf durch die Längsnaht N. Die optische Einrichtung 10 ist außerdem innerhalb der Ebene H so verschwenkbar, daß die senkrechte Projektion der Achse 14 der optischen Einrichtung 10 bzw. des von ihr fokussierten Laserstrahls 15 auf die Ebene H bzw. T und der der Vorschubrichtung V entgegengerichtete Teil der Längsmittelebene S - senkrecht von oben gesehen - einen Winkel Alpha von 60° bilden. Anders ausgedrückt: Die Achse 14 ist - radial auf die vorbereitete Naht gesehen - unter einem Winkel Alpha gegen die vorbereitete, noch unverschweißte Längsnaht geneigt. Je nach Reflexions-bzw. Absorptionsvermögen der miteinander zu verschweißenden Kontakt-oder Schweißflächen 16, 17 der Blech-oder Seitenenden 18 bzw. 19 des Dosenrumpfes 1 kann der Winkel Alpha zwischen 10 und 170°, vorzugsweise 45 bis 90° liegen. Der Winkel Beta kann dabei in einem Bereich zwischen - 10° und + 45° liegen, d.h. der fokussierte Laserstrahl 15 kann - von der optischen Einrichtung 10 aus gesehen - um bis zu 10° nach oben und bis zu 45° nach unten gegen die Ebene H geneigt sein.

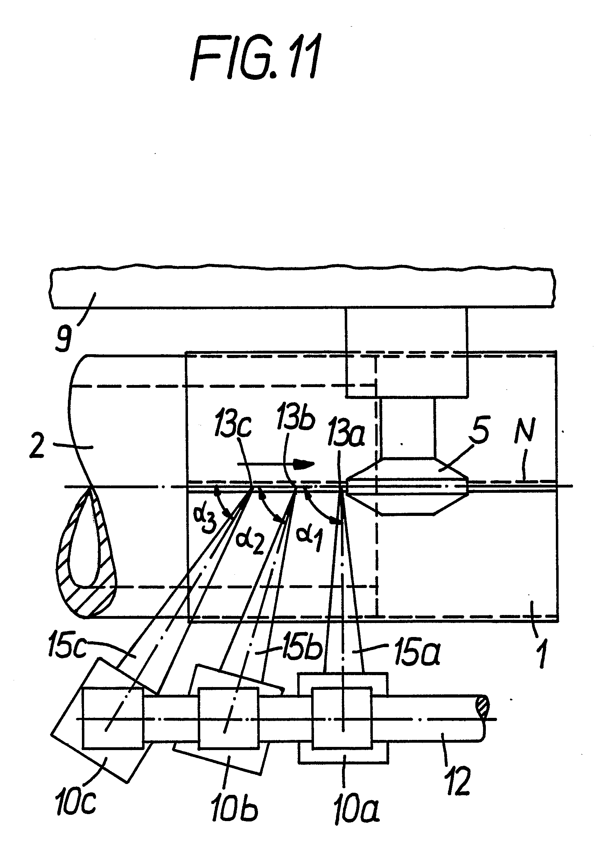

Abweichend von dem beschriebenen Ausführungsbeispiel weist die optische Einrichtung der Vorrichtung nach Fig. 11 drei Elemente 10a...10c auf, von denen jedes ein Drittel des Laserstrahls 12 unter einem Winkel Alpha-1 bzw. Alpha-2 bzw. Alpha-3 gegen die Längsmittelebene S als fokussierten Laserstrahl 15a...15c weiterleitet. Entsprechend der Anzahl der optischen Elemente 10a...10c gibt es auf der Längsmittelebene S drei Brennpunkte 13a...13c.

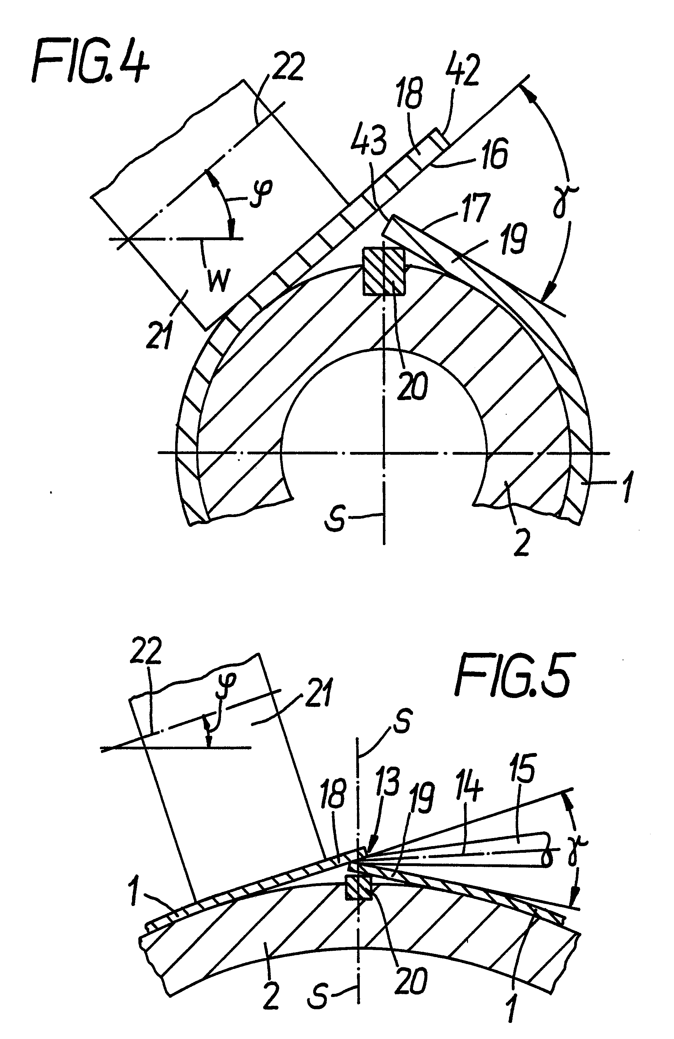

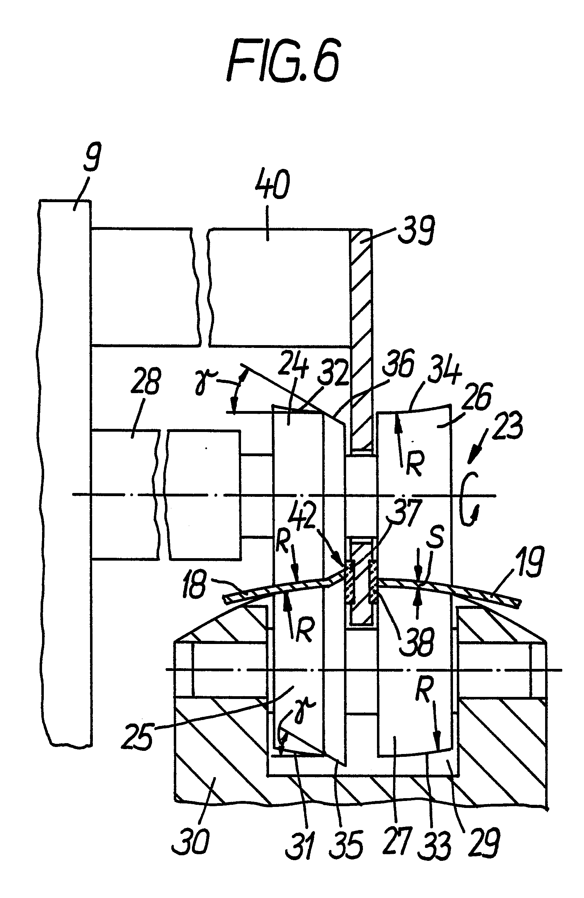

Bei dem Ausführungsbeispiel gemäß den Fig. 4 und 5 weist der Formdorn 2 im Bereich seiner obersten Mantellinie eine Leiste 20 auf, die über die zylindrische Außenfläche des Formdorns 2 nach oben hinausragt und - in Längsrichtung - mit dem Formdorn endet. An einer Seite neben der Leiste 20 befindet sich eine zylindrische Andrückrolle 21, deren in einer quer zur Längsachse des Formdorns 2 gedachten Ebene angeordnete Drehachse 22 um einen Winkel Phi gegen die Waagerechte W geneigt ist.

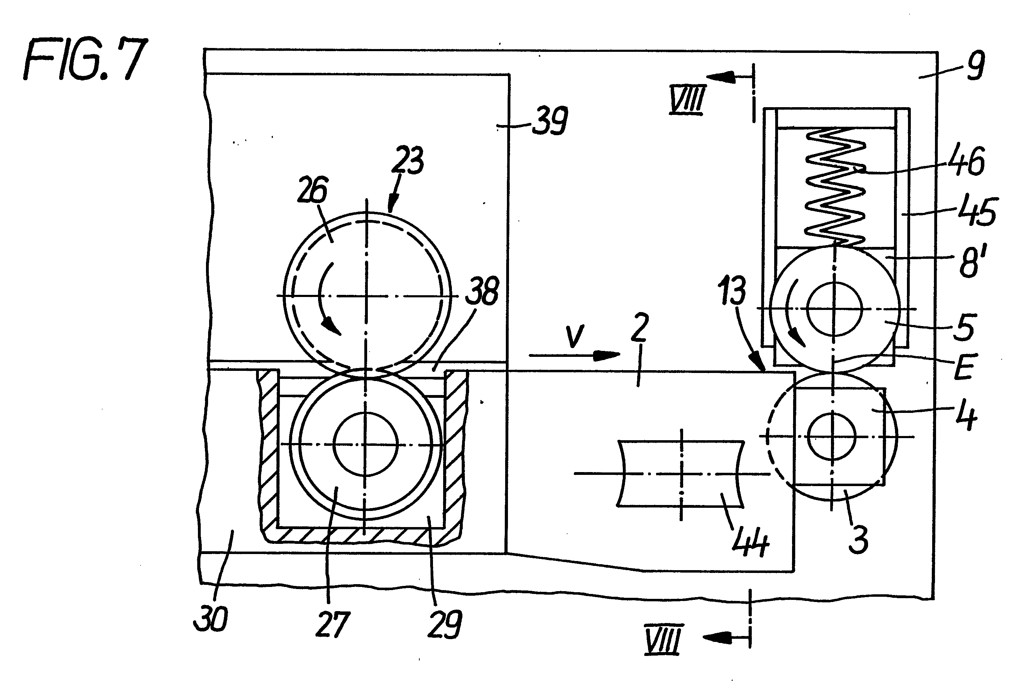

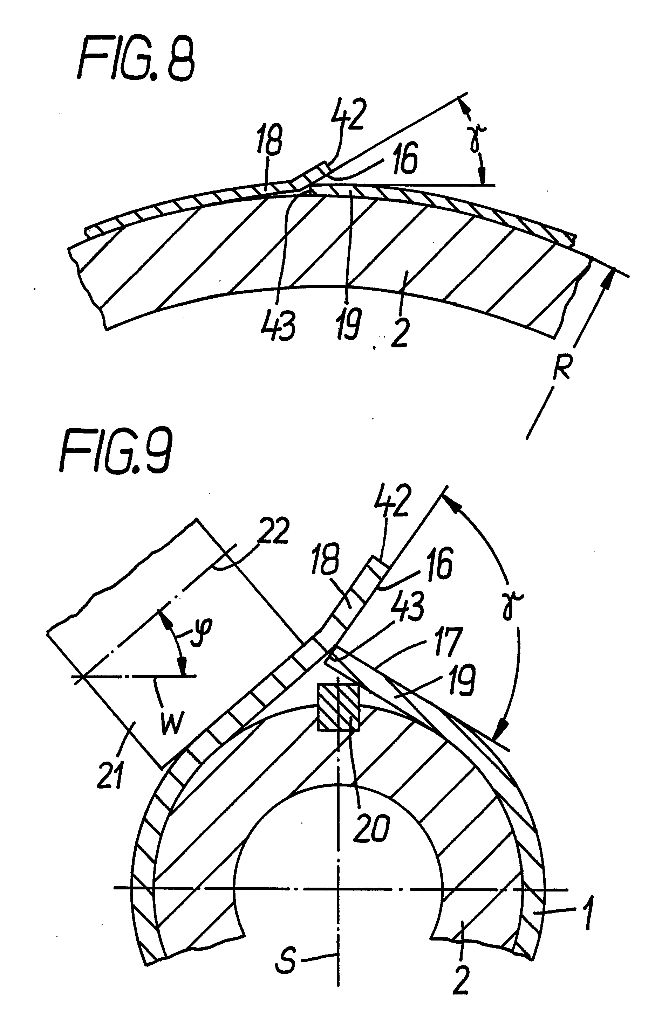

Bei einem anderen Ausführungsbeispiel ist der Formdorn an seinem Ende vollkommen zylindrisch ausgebildet (vgl. Fig. 7 und 8). Dafür weist die Vorrichtung - in Vorschubrichtung V gesehen - vor der durch die Drehachsen der Druckrollen 3, 5 gebildeten Ebene E und vor dem Brennpunkt 13 des fokussierten Laserstrahls 15 eine Form-oder Profilrollenanordnung 23 zum Abkanten bzw. Abwinkeln des einen der beiden Seiten-oder Blechkantenenden (18) auf (vgl. Fig. 6 und 7). Die Profilrollenanordnung 23 weist ein antreibbares oberes Rollenpaar 24, 26 und ein frei drehbares unteres Rollenpaar 25, 27 auf. Das Rollenpaar 24, 26 ist fliegend an einem an dem Rahmenteil 9 befestigten Lagerbock 28 und das Rollenpaar 25, 27 in einer Ausnehmung 29 des Formdornhalters 30 gelagert.

Die unteren Rollen 25, 27 weisen eine konvexe Umfangsfläche 31 bzw. 33 in Form - im Querschnitt gesehen - eines Kreisabschnitts auf, dessen Radius R dem der äußeren Zylinderfläche des Formdorns 2 (vgl. Fig. 6 und 8) entspricht. Die Rollen 24, 26 haben konkave Umfangsflächen 32 bzw. 34, deren Mantellinien ebenfalls durch einen Kreisabschnitt mit dem Radius R beschrieben sind.

An der der Rolle 27 zugewandten Seite weist die Rolle 25 außerdem noch einen konischen Flansch 35 auf. Die Mantellinie der Außenfläche des konischen Flansches 35 ist - im Querschnitt gesehen - gegen die Tangente der konvexen Umfangsfläche 31 im gemeinsamen Berührungspunkt um einen Winkel Gamma nach außen geneigt. An die Umfangsfläche 32 der Rolle 24 schließt sich in Richtung auf die Rolle 26 ein konischer Abschnitt 36 an. Die Mantellinie des konischen Abschnitts 36 ist um den Winkel Gamma gegenüber der Tangente der konkaven Umfangsfläche 32 im gemeinsamen Berührungspunkt nach innen geneigt.

Zwischen den Rollen 24, 26 bzw. 25, 27 der Rollenpaare sind - in Vorschubrichtung V gesehen - zwei Führungsleisten 37, 38 aus einem verschleißfesten Werkstoff wie z.B. Hartmetall, Keramik o. ä. angeordnet. Die Führungsleisten 37, 38 sind an einer Stegplatte 39 befestigt, die wiederum über einen Halter 40 an dem Rahmenteil 9 befestigt ist.

Bei dem Ausführungsbeispiel nach Fig. 7 ist das Lager 8' der oberen Druckrolle 5 in einer senkrechten Führung 45 bewegbar gelagert und wird von einer Druckfeder 46 in Richtung auf die untere Druckrolle 3 gedrückt. Abweichend von diesem Ausführungsbeispiel kann die obere Druckrolle 5 auch an einem (nicht dargestellten) Schwinghebel gelagert sein, der ggf. über eine Drehstabfeder mit dem Rahmenteil 9 verbunden ist.

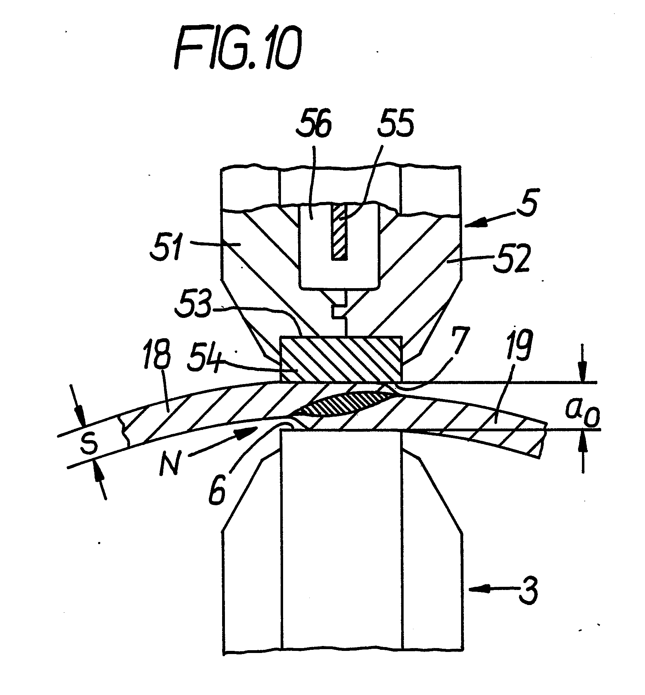

Die Druckrollen 3, 5 weisen - vgl. Fig. 10 - zwei Rollenhälften 51, 52 aus Kupfer mit einer gemeinsamen Umfangsnut 53 auf, in der ein die Laufflächen 6 bzw. 7 bildender Umfangsring 54 aus Hartmetall oder Keramik eingespannt ist. Zwischen den Rollenhälften 51, 52 ist noch eine Trennscheibe 55 angeordnet, durch die zusammen mit den Innenflächen der Rollenhälften ein Kühlmittelkanal 56 gebildet wird.

Bei der Vorrichtung nach den Fig. 1 bis 3 wird jeweils ein einzelner um den Formdorn 2 gebogener Dosenrumpf 1 auf dem Formdorn entlang bewegt. Dabei gleitet die innere Fläche des Seitenendes 19 auf der Leiste 20, während das äußere Seitenende 18 durch die Rolle 21 in Richtung auf die Kante 43 des Seitenendes 19 gedrückt wird. Je nach Winkellage der Drehachse 22 der Rolle 21 kann die innere Fläche 16 des Seitenendes 18 einen kleinen Abstand von der Kante 43 aufweisen (Fig. 4) oder fest gegen diese Kante gedrückt werden (Fig. 5), wodurch das innere Seitenende 19 in seiner Lage gut gehalten wird. Der fokussierte Laserstrahl 15 wird in die Öffnung gerichtet, die durch die innere Fläche 16 des äußeren Seitenendes 18 und die äußere Fläche 17 des inneren Seitenendes 19 gebildet wird. Dabei kann die Lage des Laserstrahls 15 in bezug auf die Flächen 16 und 17 bzw. deren gedachter winkelhalbierender Ebene dadurch verändert werden, daß die optische Einrichtung 10 gegen die Horizontale H verschwenkt und in der Höhe entsprechend verstellt wird. Dadurch läßt sich ein gleichmäßiges Anschmelzen beider Flächen 16, 17 erreichen. Unmittelbar nach dem Durchlaufen des Brennpunktes 13 des Laserstrahls 15 werden die entsprechenden Abschnitte der Seitenenden 18, 19 durch den Spalt der Druckrollen 3, 5 bewegt (vgl. Fig. 10). Der Abstand $a_0$ zwischen den Umfangsflächen 6, 7 der Rollen 3, 5 ist vorzugsweise kleiner als zwei Blechdicken (2s), so daß die Seitenenden 18, 19 noch vor dem Erkalten ihrer erschmolzenen Teile zu einer gemeinsamen Schweißnaht N zusammengepreßt werden, deren bleibende Dicke ebenfalls entsprechend weniger als zwei Blechdicken beträgt.

Bei einem anderen Ausführungsbeispiel des Verfahrens wird das äußere Seitenende durch die Rollen 24, 25 nach außen abgeknickt. Dabei gleiten die Kanten 42, 43 der Seitenenden 18 bzw. 19 an Führungs-oder Verschleißleisten 37, 38. Vor dem Durchgang durch den Brennpunkt 13 und das Rollenpaar 3, 5 werden die jeweiligen Abschnitte des Dosenrumpfes 1 und insbesondere die Seitenenden 18, 19 durch zusätzlichen Rollen 44 (von denen in Fig. 7 nur eine dargestellt ist) in die in Fig. 8 dargestellte Lage gebracht. Bei dieser vorbereiteten Naht muß der Laserstrahl 15 entsprechend steiler angestellt werden als für die Naht entsprechend der Fig. 5.

Es ist auch möglich das innere Seitenende 19 auf einer Leiste 20 auf dem Formdorn 2 gleiten zu lassen und ein nach außen abgeknicktes äußeres Seitenende 18 gegen die Kante 43 des Seitenendes 19 zu drücken, wie dies aus der Fig. 9 hervorgeht. In diesem Fall erhält man einen besonders großen Öffnungswinkel Gamma des vorbereiteten Schweißspaltes.

## Ansprüche

1. Verfahren zum Herstellen von Behälterrümpfen aus Blech mit mittels eines Laserstrahls geschweißter Längsnaht, **dadurch gekennzeichnet,** -daß ein Blech verwendet wird, dessen Breite die nominelle Umfangslänge des Behälterrumpfes (1) übersteigt, -daß die Seitenenden (18, 19) des Blechs beim oder nach dem Bilden der Form des Behälterrumpfes (1) in eine solche Position zueinander gebracht werden, daß sie - im Querschnitt gesehen - einen spitzen Winkel (Gamma) bilden, wobei die Kante (43) des einen Seitenendes (19) auf die Innenfläche (16) des anderen Seitenendes (18) weist, -daß mindestens ein fokussierter Laserstrahl (15) in die durch den spitzen Winkel (Gamma) gebildete Öffnung der beiden Seitenenden (18, 19) gerichtet und eine Relativbewegung zwischen dieser Öffnung in ihrer Längserstreckung und dem fokussierten Laserstrahl (15) herbeigeführt wird, -daß die den spitzen Winkel (Gamma) bildenden Flächen (16, 17) der Seitenenden (18, 19) dabei zumindest teilweise auf eine Temperatur oberhalb der Schweißtemperatur erwärmt werden und -daß die Seitenenden (18, 19) vor dem Unterschreiten der Schweißtemperatur unter Bildung einer Schweißnaht (N) zusammengedrückt werden.

2. Verfahren nach Anspruch 1, dadurch gekennzeichnet, daß ein Seitenende (19) bündig an einen Formdorn (2) angedrückt und der zwischen den beiden Seitenenden (18, 19) gebildete spitze Winkel (Gamma) durch Abwinkeln des anderen Seitenendes (18) herbeigeführt wird.

3. Verfahren nach Anspruch 1, dadurch gekennzeichnet, daß der zwischen den Seitenenden (18, 19) des Blechs gebildete spitze Winkel (Gamma) dadurch hergestellt wird, daß ein im wesentlichen ebenes Seitenende (19) tangential verlaufend von einem Formdorn (2) abgehoben und das andere ebenfalls im wesentlichen ebene Seitenende (18) mit seiner Innenfläche (16) an die Kante (43) des ersten Seitenendes (19) angenähert wird.

4. Verfahren nach Anspruch 3, dadurch gekennzeichnet, daß das andere Seitenende (18) vor dem Annähern an die Kante (43) des ersten Seitenendes (19)nach außen abgewickelt wird.

5. Verfahren nach Anspruch 1, dadurch gekennzeichnet, daß die senkrechte Projektion der Achse (14) des fokussierten Laserstrahls (15) auf die Tangentialebene (T) durch die Längsnaht (N) mit dem der Vorschubrichtung (V) entgegengerichteten Teil der Längsmittelebene (S) einen Winkel (Alpha) zwischen 10 und 170°, vorzugsweise zwischen 45 und 90° bildet.

6. Verfahren nach Anspruch 5, dadurch gekennzeichnet, daß der fokussierte Laserstrahl (15) derart auf die zur Bildung der Längsnaht (N) bestimmten Flächen (16, 17) der Seitenenden 18, 19) trifft, daß die Achse (14) des Laserstrahls (15) - von seinem Brennpunkt (13) aus gesehen - unter einem Winkel (Beta) von bis 45° nach oben und bis 10° nach unten gegen die durch die Längsnaht (N) gehende Tangentialebene (T) geneigt ist.

7. Verfahren nach Anspruch 1, dadurch gekennzeichnet, daß die Seitenenden (18, 19) derart zusammengedrückt werden, daß die bleibende Dicke ($a_0$) der Längsnaht (N) kleiner ist als die Summe der ursprünglichen Blechdicken (2s) der Seitenenden (18, 19).

8. Vorrichtung mit einer Anordnung zur Führung und Positionierung vorgeformter Behälterrümpfe einschließlich ihrer zu verschweißenden Seitenenden und mit einer optischen Einrichtung zur Zuführung mindestens eines fokussierten Laserstrahls zur Durchführung des Verfahrens nach den Ansprüchen 1 bis 7, dadurch gekennzeichnet,
- daß die Vorrichtung eine Anordnung zur Bildung einer winkelförmigen Öffnung zwischen den Seitenenden (18, 19) des Blechs aufweist,
- daß die optische Einrichtung (10) in bezug auf die Längsmittelebene (S) durch die Längsnaht (N) und durch die Achse des Formdorns (2) winkelmäßig veränderlich einstellbar ist und
- daß ein Druckrollenpaar (3, 5) vorhanden ist, wobei der lichte Abstand ($a_0$) der Druckrollen einstellbar und eine der Druckrollen (5) antreibbar ist.

9. Vorrichtung mit einer Anordnung zur Führung und Positionierung vorgeformter Behälterrümpfe einschließlich ihrer zu verschweißenden Seitenenden und mit einer optischen Einrichtung zur Zuführung mindestens eines fokussierten Laserstrahls zur Durchführung des Verfahrens nach den Ansprüchen 1 bis 7,

dadurch gekennzeichnet,
- daß die Vorrichtung eine Anordnung zur Bildung einer winkelförmigen Öffnung zwischen den Seitenenden (18, 19) des Blechs aufweist,
- daß die optische Einrichtung (10) in bezug auf die Längsmittelebene (S) durch die Längsnaht (N) und durch die Achse des Formdorns (2) winkelmäßig veränderlich einstellbar ist und
- daß ein Druckrollenpaar (3, 5) vorhanden ist, von dem mindestens eine Druckrolle (5) quer zur Vorschubrichtung (V) beweglich gegenüber der anderen Druckrolle (3) gelagert und durch eine einstellbare Kraft in Richtung auf diese druckbeaufschlagt ist.

10. Vorrichtung nach einem der Ansprüche 8 oder 9, dadurch gekennzeichnet, daß die Anordnung zur Bildung der winkelförmigen Öffnung zwischen den Seitenenden (18, 19) des Blechs eine über die Oberfläche des Formdorns (2) hinausragende Leiste (20) und eine Andrückrolle (21) aufweist.

11. Vorrichtung nach einer der Ansprüche 8 oder 9, dadurch gekennzeichnet, daß die Anordnung zur Bildung der winkelförmigen Öffnung zwischen den Seitenenden (18, 19) des Blechs zwei Profilrollenpaare (24, 25; 26, 27) mit dem Dosenrumpf (1) angepaßten Laufflächen (31, 32; 33, 34) aufweist, wobei das Profilrollenpaar (24, 25) für ein Seitenende (18) eine außerhalb des Formdorns (2) befindliche Rolle (24) mit einem sich in Richtung auf das andere Seitenende (19) verjüngenden Abschnitt (36) und eine zumindest teilweise im Formdorn (2) befindliche Rolle (25) mit einem sich entsprechend erweiternden Flansch (35) aufweist.

12. Vorrichtung nach Anspruch 11, dadurch gekennzeichnet, daß die jeweils äußeren Profilrollen (24, 26) antreibbar sind.

13. Vorrichtung nach Anspruch 11, dadurch gekennzeichnet, daß zwischen - in Vorschubrichtung (V) gesehen - den linken und den rechten Profilrollen (24, 25 bzw. 26, 27) mindestens eine Führungsleiste (37, 38) angeordnet ist.

14. Vorrichtung nach einem der Ansprüche 8 oder 9, dadurch gekennzeichnet, daß die optische Einrichtung (10) gegen die durch die Längsnaht (N) gegebene Tangentialebene (T) an den Dosenrumpf (1) winkelmäßig veränderlich einstellbar ist.

15. Vorrichtung nach einem der Ansprüche 8 oder 9, dadurch gekennzeichnet, daß die äußere Druckrolle (5) eine konkave und die innere Druckrolle (3) eine konvexe Umfangsfläche (7 bzw. 6) aufweist, wobei der Radius der konkaven Umfangsfläche (7) von dem Radius eines gegebenenfalls zylindrischen Behälterrumpfes (1) bis unendlich reicht, während der Radius der konvexen Umfangslfäche (6) höchstens dem Radius des gegebenenfalls zylindrischen Behälterrumpfes (1) entspricht.

16. Vorrichtung nach einem der Ansprüche 8 oder 9, dadurch gekennzeichnet, daß die äußere Druckrolle (5) antreibbar ist.

17. Vorrichtung nach einem der Ansprüche 8 oder 9, dadurch gekennzeichnet, daß die Druckrollen (3, 5) aus einem Werkstoff mit hoher Wärmeleitfähigkeit bestehen und Hohlräume für den Durchfluß von Kühlmedien sowie einen die Laufflächen (6, 7) bildenden Umfangsring (54) aus warmfestem Werkstoff aufweisen.

FIG.1

FIG. 2

FIG.3

FIG.4

FIG.5

# FIG.6

# FIG.7

0 259 651

## FIG.8

## FIG.9

# FIG.10

# FIG.11

# EUROPÄISCHER RECHERCHENBERICHT

**Europäisches Patentamt**

## EINSCHLÄGIGE DOKUMENTE

EP 87111869.1

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,A | DE - A1 - 3 219 252 (LUCAS) <br> * Fig. 1 * <br> ---- | 1 | B 23 K 26/00 |
| | | | **RECHERCHIERTE SACHGEBIETE (Int. Cl.4)** |
| | | | B 23 K 26/00 <br> B 23 K 31/00 <br> B 23 K 33/00 <br> B 21 D 51/00 |

Der vorliegende Recherchenbericht wurde für alle Patentansprüche erstellt.

| Recherchenort | Abschlußdatum der Recherche | Prüfer |
|---|---|---|
| WIEN | 14-12-1987 | BENCZE |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82